# EUROPÄISCHE PATENTSCHRIFT

(11) **EP 1 583 214 B1**
(45) Veröffentlichungstag und Bekanntmachung des Hinweises auf die Patenterteilung: **13.10.2010**
(21) Anmeldenummer: 04028200.6
(22) Anmeldetag: 27.11.2004
(51) Int. Cl.: H02P 1/42

(54) **Vorrichtung zum Betrieb eines Stellsystems**
Apparatus for operating a positioning system
Dispositif de commande d'un système de positionnement

(30) Priorität: 09.12.2003 DE 10357312
(43) Veröffentlichungstag der Anmeldung: 05.10.2005
(73) Patentinhaber: elero GmbH, 72660 Beuren (DE)
(72) Erfinder: Walddörfer, Dieter, 73252 Lenningen (DE)
(74) Vertreter: Ruckh, Rainer Gerhard

(56) Entgegenhaltungen:
- WO-A-01/93452
- US-A- 5 610 491
- US-A1- 2003 052 771

## Beschreibung

Die Erfindung betrifft eine Vorrichtung zum Betrieb eines Stellsystems gemäß des Oberbegriffs des Anspruchs 1.

Eine derartige Vorrichtung ist aus der US 2003/0052771 A1 bekannt.

In der WO 01/93452 A1 ist ein Niederspannungs-Stromversorgungsnetz beschrieben, welches einen ersten Leiter und einen zweiten Leiter aufweist, die in einem für die Datenübertragung vorgesehenen Bereich des Niederspannungs-Stromversorgungsnetzes im Wesentlichen parallel nach Art einer Doppelleitung angeordnet sind. Zur Datenübertragung wird ein Trägersignal in einem Gegentaktmodus zwischen dem ersten Leiter und dem zweitem Leiter erzeugt, wobei die Frequenz dieses Trägersignals wesentlich über der Netzfrequenz liegt.

Aus der DE 203 08 840 U1 ist eine Vorrichtung, die einen als Wechselstrommotor ausgebildeten Antrieb aufweist, mittels dessen ein Stellsystem wie zum Beispiel ein Rollladen oder eine Markise in zwei Laufrichtungen betrieben werden kann. Zum Ein- und Ausschalten des Antriebs ist ein Leistungsschalter, insbesondere ein Triac vorgesehen. Die Vorgabe der Laufrichtung des Stellsystems erfolgt dadurch, dass eine Versorgungsspannung entweder an eine erste oder an eine zweite Wicklung des Wechselstrommotors angelegt wird. Als Anschlussmittel für die Versorgungsspannung weist die Vorrichtung typischerweise einen Stecker oder dergleichen auf, auf welchen Leitungen geführt sind, über welche die Versorgungsspannung an die Wicklungen des Wechselstrommotors angelegt wird. Zur Steuerung des Antriebs ist eine Steuereinheit vorgesehen, welche von einem Mikrocontroller gebildet ist. Die im Mikrocontroller implementierte Software enthält applikationsspezifische Anteile in Form von Parameterwerten, mittels derer die Funktionalität der Steuereinheit für die jeweilige Applikation der Vorrichtung angepasst ist.

Die Vorgabe der applikationsspezifischen Parameter erfolgt während des Fertigungsprozesses der Vorrichtung.

Ein Beispiel für derartige applikationsspezifische Parameter ist die Vorgabe von Geschwindigkeitsprofilen für die Bewegung eines Stellsystems. Für den Fall, dass das Stellsystem von einer Markise gebildet ist, kann durch Vorgabe geeigneter Parameter der Geschwindigkeitsverlauf des Antriebs einerseits derart vorgegeben werden, dass in einem oberen Endanschlag die Markise entlastet wird um das Markisentuch zu schonen. Andererseits kann die Parametervorgabe derart erfolgen, dass die Markise am Endanschlag satt aufläuft um beispielsweise eine Dichtlippe zu schließen.

Generell muss die Implementierung der applikationsspezifischen Software in der Steuereinheit vor der Fertigmontage der Vorrichtung, d.h. des Gesamtsystems bestehend aus dem Antrieb mit der zugehörigen Steuereinheit erfolgen. Dadurch wird eine Lagerhaltung verschiedenartiger Versionen derartiger Gesamtsysteme erforderlich.

Abgesehen davon, dass hierdurch ein erheblicher Kostenaufwand bei der Herstellung derartiger Vorrichtungen entsteht, ist zudem nachteilig, dass die Lagerhaltung einer Vielzahl unterschiedlicher Varianten zu Verwechslungen führen kann. Wird aufgrund einer derartigen Verwechslung ein Stellsystem mit einer falschen Vorrichtung ausgerüstet, so muss diese komplett ausgetauscht werden. Dies bedingt einen erheblichen Kosten- und Zeitaufwand.

Der Erfindung liegt die Aufgabe zugrunde eine Vorrichtung der eingangs genannten Art bereitzustellen, deren Funktionalität mit möglichst geringem Aufwand an unterschiedliche Applikationen anpassbar ist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die erfindungsgemäße Vorrichtung dient zum Betrieb eines Stellsystems in zwei Laufrichtungen. Die Vorrichtung umfasst einen Antrieb zur Betätigung des Stellsystems, eine Steuereinheit zur Steuerung des Antriebs und Anschlussmittel zur Einspeisung einer Versorgungsspannung. Über die Anschlussmittel ist ein Steuersignal in die Steuereinheit einlesbar, wodurch diese in einen Parametriermodus versetzt werden kann. Im Parametriermodus werden Parametrierbefehle über die Anschlussmittel in die Steuereinheit eingelesen. Zur Parametrierung der Vorrichtung ist ein Parametriergerät an die Anschlussmittel abschließbar. Die Anschlussmittel weisen Anschlüsse für zwei Leitungen (R, L) auf. Zur Vorgabe der Laufrichtung des Stellsystems wird selektiv die Versorgungsspannung auf eine der beiden Leitungen gelegt. Der Antrieb ist von einem Wechselstrommotor gebildet, welcher eine erste und zweite Wicklung aufweist, an welche über jeweils eine der Leitungen zur Vorgabe der Laufrichtung die Versorgungsspannung anlegbar ist. Der Antrieb ist mittels wenigstens eines Leistungsschalters ein- und ausschaltbar.

Der Grundgedanke der Erfindung besteht somit darin, die erfindungsgemäße Vorrichtung, insbesondere die in der Steuereinheit implementierte Software parametrierbar auszugestalten. Aufgrund dessen kann die Vorrichtung nicht nur während des Fertigungsprozesses sondern auch vor Ort während des Betriebs des Stellsystems an die jeweilige Applikation angepasst werden. Dies bedeutet gegenüber dem bisher erforderlichen Austausch der Vorrichtung zur Durchführung derartiger Anpassungen eine erhebliche Vereinfachung.

Ein wesentlicher Vorteil der erfindungsgemäßen Vorrichtung besteht darin, dass deren Anschlussmittel zum Anschluss an eine externe Versorgungsspannung zur Parametrierung genutzt werden können. Weiterhin können die in der Vorrichtung zum Betrieb des Stellsystems vorhandenen Komponenten zur Parametrierung der Vorrichtung genutzt werden.

Damit brauchen zur Parametrierung in der Vorrichtung keinerlei zusätzliche Hardware-Komponenten vorgesehen werden. Die erfindungsgemäße Vorrichtung kann somit mit einem geringen Aufwand an unterschiedliche Applikationen angepasst werden.

Die Parametrierung der Vorrichtung erfolgt mittels eines an die Anschlussmittel anschließbaren Parametriergeräts innerhalb eines Parametriermodus, der vorzugsweise mit einem als Trägersignal ausgebildeten Steuersignal aktiviert wird. Das Trägersignal wird in dem Parametriergerät aus der Versorgungsspannung abgeleitet und wird somit nicht nur zur Aktivierung des Parametriermodus sondern auch zur Spannungsversorgung der Vorrichtung genutzt. Besonders vorteilhaft ist die Frequenz des Trägersignals gegenüber der Frequenz der Versorgungsspannung verdoppelt. Das so ausgebildete Trägersignal kann auf einfache Weise durch Gleichrichtung aus der Versorgungsspannung abgeleitet werden. Zudem kann das so ausgebildete Trägersignal sicher in der Steuereinheit erkannt und von der Versorgungsspannung unterschieden werden.

Das Trägersignal wird bevorzugt über eine Leitung zur Vorgabe einer ersten Laufrichtung des Stellsystems eingespeist, während die Parameterbefehle bevorzugt über eine zweite Leitung zur Vorgabe einer zweiten Laufrichtung und damit unabhängig vom Trägersignal übertragen werden.

Die Datenübertragung zur Übertragung der Parameterbefehle kann prinzipiell derart erfolgen, dass diese von der Steuereinheit lediglich quittiert werden. Besonders vorteilhaft kann eine bidirektionale Datenübertragung zwischen dem Parametriergerät und der Vorrichtung erfolgen. Dann können nicht nur Daten zur Parametrierung in die Vorrichtung eingelesen werden. Vielmehr ist auch ein Auslesen derartiger Daten zu Kontroll- und Diagnosezwecken möglich.

Die Erfindung wird im Nachstehenden anhand der Zeichnungen erläutert. Es zeigen:
- Figur 1:: Schematische Darstellung eines Ausführungsbeispiels einer Vorrichtung zum Betrieb eines Stellsystems.
- Figur 2:: Schematische Darstellung eines Parametriergeräts für die Vorrichtung gemäß Figur 1.
- Figur 3:: Zeitdiagramme von während eines Parametriermodus zwischen der Vorrichtung gemäß Figur 1 und dem Parametriergerät gemäß Figur 2 übertragenen Signalen.

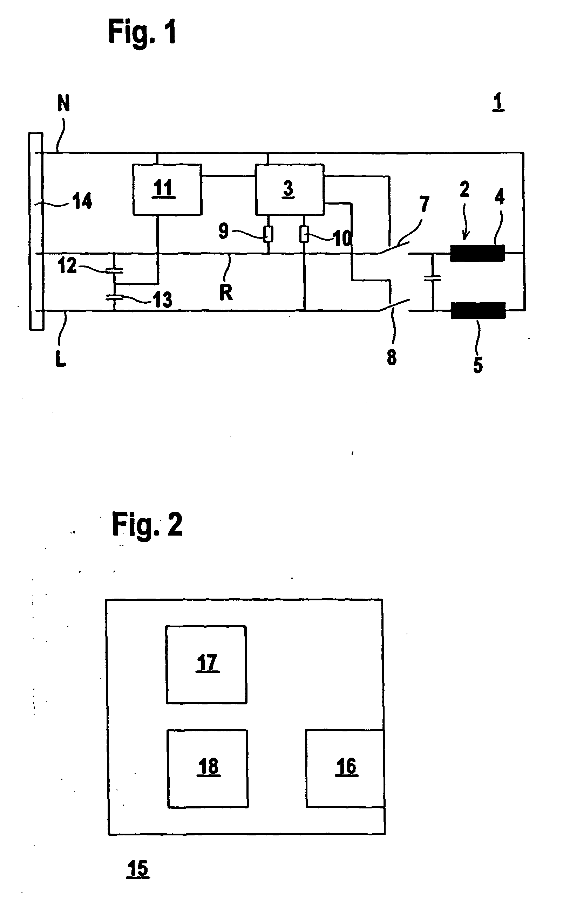

Figur 1 zeigt schematisch eine Vorrichtung 1 zum Betrieb eines Stellsystems. Das Stellsystem ist im vorliegenden Fall von einem Rollladen gebildet. Alternativ kann das Stellsystem auch von einer Jalousie, einer Markise oder einem Tor gebildet sein. Generell kann die Vorrichtung 1 auch als Schubspindelantrieb zur Betätigung von Beschattungsanlagen und dergleichen ausgebildet sein.

Die Vorrichtung 1 gemäß Figur 1 weist einen als Wechselstrommotor 2 ausgebildeten Antrieb auf, der von einer Steuereinheit 3 angesteuert wird. Die Steuereinheit 3 ist von einem Mikrocontroller gebildet.

Das Stellsystem kann zwischen einer oberen und unteren Endposition verfahren werden. Zur Durchführung der Aufwärts- und Abwärtsbewegung des Stellsystems wird der Wechselstrommotor 2 in zwei unterschiedlichen Laufrichtungen betrieben.

Wie aus Figur 1 ersichtlich weist der Wechselstrommotor 2 zwei Wicklungen 4, 5 auf, die über einen Motorkondensator 6 gekoppelt sind. Die Wicklungen 4, 5 des Wechselstrommotors 2 sind identisch ausgebildet.

Jeweils eine Leitung R, L ist auf eine der Wicklungen 4, 5 des Wechselstrommotors 2 geführt. Zur Vorgabe der Laufrichtung des Wechselstrommotors 2 wird an eine der beiden Leitungen R, L eine Versorgungsspannung in Form einer Wechselspannung angelegt. Durch Anlegen der Versorgungsspannung an die erste Leitung R wird somit eine erste Laufrichtung des Wechselstrommotors 2 vorgegeben, mit welcher eine Aufwärtsbewegung des Stellsystems durchgeführt wird. Entsprechend wird bei der an der zweiten Leitung L anliegenden Netzspannung eine Abwärtsbewegung des Stellsystems generiert.

In jeder der Leitungen R, L ist ein Leistungsschalter 7, 8 angeordnet. Die Leistungsschalter 7, 8 sind im vorliegenden Fall von einem Triac gebildet. Die Triacs werden von der Steuereinheit 3 angesteuert. Dadurch können die Triacs selektiv gezündet werden, wodurch sich der Wechselstrommotor 2 in der Laufrichtung dreht, die durch das Anlegen der Versorgungsspannung an eine der Leitungen R, L vorgegeben ist.

Die Steuereinheit 3 ist jeweils über einen Widerstand 9, 10 an die Leitungen R, L angeschlossen, wobei die Widerstände 9, 10 zur Drehrichtungserkennung des Wechselstrommotors 2 dienen.

Weiterhin weist die Vorrichtung 1 ein Netzteil 11 auf, mittels dessen die Versorgungsspannung auf eine geeignete Eingangsspannung für den Wechselstrommotor 2 transformiert wird. Das Netzteil 11 ist an die Steuereinheit 3 angeschlossen sowie über Kondensatoren 12, 13 auf die Leitungen R, L geführt.

Die Leitungen R, L sind zusammen mit einem Null-Leiter N auf Anschlussmittel 14 der Vorrichtung 1 geführt, welche von einem Stecker oder dergleichen gebildet sind. Mit den Anschlussmitteln 14 ist die Vorrichtung 1 an eine Spannungsversorgung anschließbar, so dass mit dieser das Stellsystem während einer Betriebsphase in den beiden Laufrichtungen betrieben werden kann.

In der Steuereinheit 3 ist eine Software zur Steuerung des Antriebs und der diesem zugeordneten Komponenten implementiert. Dabei sind in der Steuereinheit 3 applikationsspezifische Daten in Form von Parameterwerten hinterlegt.

Zur Parametrierung der Vorrichtung 1 gemäß Figur 1 ist an diese ein Parametriergerät 15 anschließbar, welches in Figur 2 schematisch dargestellt ist. Das Parametriergerät 15 weist einen Anschluss 16 auf, der an die Anschlussmittel 14 der Vorrichtung 1 angeschlossen werden kann. Weiterhin weist das Parametriergerät 15 eine Rechnereinheit 17 auf, die bevorzugt aus einem Mikrocontroller besteht. Schließlich ist ein von der Rechnereinheit 17 ansteuerbares Schaltelement 18 zur Generierung eines Steuersignals vorgesehen. Das Schaltelement 18 kann von einem Transistor oder einem Brückengleichrichter gebildet sein.

Durch das in dem Parametriergerät 15 generierte Steuersignal wechselt die Vorrichtung 1 aus der Betriebsphase in einen Parametriermodus. In diesem Parametriermodus werden Parameterbefehle zur Parametrierung der Vorrichtung 1 in die Steuereinheit 3 der Vorrichtung 1 eingelesen.

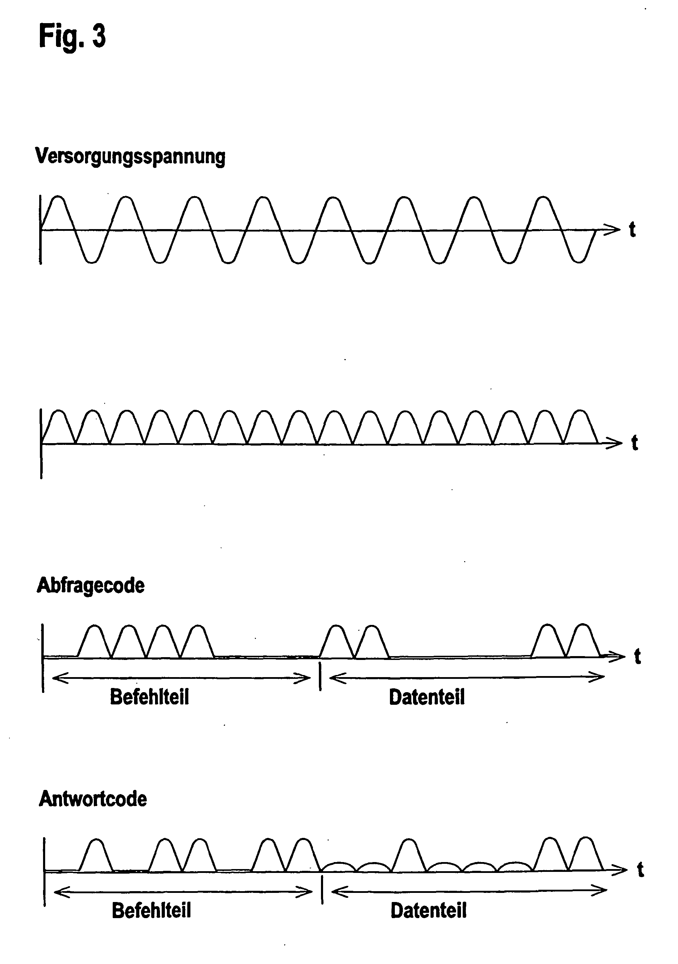

Der Ablauf der Parametrierung der Vorrichtung 1 wird im Folgenden anhand der in Figur 3 dargestellten Zeitdiagramme erläutert.

Das obere Diagramm zeigt den zeitlichen Verlauf der Versorgungsspannung, die in der Betriebsphase der Vorrichtung 1 zur Vorgabe der Laufrichtung des Wechselstrommotors 2 an eine der Leitungen R, L angelegt wird. Im vorliegenden Fall ist die Versorgungsspannung von einer sinusförmigen Wechselspannung mit 230 V und 50 Hz gebildet. In dem Netzteil 11 wird diese Wechselspannung in eine Eingangsspannung für den Wechselstrommotor 2 angesetzt, die typischerweise bei 5 V liegt. Je nach Einsatzgebiet der Vorrichtung 1 kann der Spannungswert oder die Frequenz der Versorgungsspannung variieren. Insbesondere kann die Versorgungsspannung auch von einer Wechselspannung mit 230 V und 60 Hz gebildet sein.

Wird zur Parametrierung der Vorrichtung 1 das Parametriergerät 15 an diese angeschlossen, so wird aus der Versorgungsspannung mittels des Schaltelements 18 das im zweiten Diagramm in Figur 3 dargestellte Trägersignal gewonnen und als Steuersignal in die Vorrichtung 1 eingespeist. Im vorliegenden Fall wird das Trägersignal über die Leitung R in die Vorrichtung 1 eingespeist.

Das Trägersignal wird durch Gleichrichtung der Versorgungsspannung gewonnen. Dementsprechend weist das Trägersignal eine Frequenz von 100 Hz auf, welches dem doppelten Wert der Grundfrequenz von 50 Hz der Versorgungsspannung entspricht.

Das Trägersignal wird in der Steuereinheit 3 erfasst, wobei hierzu in dieser eine vorzugsweise als Softwaremodul ausgebildete Demodulationseinheit integriert ist. In der Steuereinheit 3 wird durch das Erkennen der Frequenz des Trägersignals, die sich signifikant von der Grundfrequenz der Versorgungsspannung unterscheidet, der Parametriermodus eingeleitet. Während des Parametriermodus steht das Trägersignal fortwährend auf der Leitung R an und wird zur Spannungsversorgung der Vorrichtung 1 genutzt.

Zur Parametrierung der Vorrichtung 1 werden über die zweite Leitung L Parameterbefehle von dem Parametriergerät 15 in die Steuereinheit 3 eingelesen. Derartige Parameterbefehle sind als Abfragecodes ausgebildet, die in der Rechnereinheit 17 des Parametriergeräts 15 generiert und über den Anschluss 16 ausgegeben werden. Im vorliegenden Fall wird auf jeden Abfragecode in der Vorrichtung 1 ein Antwortcode generiert und an das Parametriergerät 15 zurückgesandt. Prinzipiell kann der Antwortcode als einfache Quittierung ausgebildet sein, anhand derer im Parametriergerät 15 überprüft werden kann, ob der jeweilige Antwortcode in der Vorrichtung 1 registriert wurde.

Im vorliegenden Fall werden mit dem Antwortcode ebenso wie mit dem Abfragecode Daten übertragen, so dass eine bidirektionale Datenübertragung zwischen der Vorrichtung 1 und dem Parametriergerät 15 erfolgt.

Ein derartiger Abfragecode und ein darauf folgender Antwortcode ist beispielhaft in den beiden unteren Diagrammen der Figur 3 dargestellt. Wie aus diesen Diagrammen der Figur 3 ersichtlich, sind die Abfragecodes und die Antwortcodes jeweils von Folgen von binären Signalen bildenden Spannungspulsen gebildet.

Dabei wird der Signalwert "high" mit einem Spannungspuls kodiert, welcher einer Halbwelle des Trägersignals entspricht. Der Signalwert "low" mit einem Spannungswert von näherungsweise 0 V kodiert. Die Decodierung der so gebildeten binären Signalfolgen erfolgt mittels einer geeigneten Schwellwerteinheit als Bestandteil der jeweiligen Demodulationseinheit in der Steuereinheit 3 bzw. in der Rechnereinheit 17 des Parametriergeräts 15.

Die einen Abfragecode bildenden Spannungspulse werden in dem Parametriergerät 15 aus dem Takt des Trägersignals abgeleitet und auf die Leitung L der Vorrichtung 1 ausgegeben. Der Abfragecode wird in der Steuereinheit 3 decodiert. Zur Generierung eines Antwortcodes auf den Abfragecode wird der Leistungsschalter 8 auf der Leitung L durch die Steuereinheit 3 betätigt. Durch das Schließen des Leistungsschalters 8 wird durch die Wicklung 5 des Wechselstrommotors die Leitung L belastet. Bei geöffnetem Leistungsschalter 8 erfolgt dagegen keine Belastung. Durch codiertes Öffnen und Schließen des Leistungsschalters 8 über die Steuereinheit 3 wird somit der Antwortcode auf die Leitung L ausgegeben und in das Parametriergerät 15 eingelesen.

Im vorliegenden Fall sind die Leistungsschalter 7, 8 jeweils von einem nahezu verzögerungsfrei arbeitenden Triac gebildet. Damit kann jede Halbwelle des Trägersignals zur Kodierung der zu übertragenden Informationen genutzt werden. Für den Fall, dass die Leistungsschalter 7, 8 von Relais gebildet sind, müssen aufgrund der relativ großen An- und Abfallverzögerungen dieser Bauteile jeweils mehrer Halbwellen des Trägersignals zur Kodierung der zu übertragenden Informationen verwendet werden. Die Taktrate der Datenübertragung ist in diesem Fall entsprechend geringer.

Wie aus Figur 3 ersichtlich weisen der Abfragecode und der Antwortcode jeweils dieselbe Struktur auf. Dabei bildet der erste Teil des Abfragecodes oder Antwortcodes einen Befehlteil. Auf den Befehlteil folgt ein Datenteil. Die Befehlsteile der Abfragecodes und Antwortcodes weisen dieselbe Wortbreite, d.h. dieselbe Anzahl von binären Signalen auf. Entsprechendes gilt für die Datenteile der Abfrage- und Antwortcodes.

Mit dem Befehlteil wird eine durchzuführende Aktion übertragen, wogegen mit dem Datenteil bestimmte Datenwerte übertragen werden. Beispiele für mit den Befehlteilen übertragene Aktionen sind das Einlesen oder Auslesen von Parametern. Weiterhin ist auch eine Auswahl aus mehreren abgespeicherten Parametern möglich.

Zur Parametrierung der Vorrichtung 1, insbesondere zur Durchführung der Datenübertragung mit dem Parametriergerät 15, können ausschließlich die in der Vorrichtung 1 zum Betrieb des Stellsystems vorgesehenen Komponenten genutzt werden. Die Datenübertragung wird dabei von der Steuereinheit 3 gesteuert. Zur Generierung der Signalfolgen für einen Antwortcode wird einer der Leistungsschalter 7, 8 genutzt. Schließlich können die für die Spannungsversorgung vorgesehenen Anschlussmittel 14 auch zum Anschluss 16 des Parametriergeräts 15 genutzt werden. Damit brauchen zur Parametrierung der Vorrichtung 1 keine zusätzlichen Hardware-Komponenten vorgesehen werden.

Nachdem die Parametrierung der Vorrichtung 1 abgeschlossen ist, wird das Parametriergerät 15 von den Anschlussmitteln 14 der Vorrichtung 1 abgekoppelt. Die Vorrichtung 1 wird dann zum Betrieb des Stellsystems direkt an eine externe Spannungsversorgung angeschlossen. Da in der Steuereinheit 3 dann das Trägersignal nicht mehr empfangen wird, erfolgt selbsttätig ein Übergang vom Parametriermodus in die Betriebsphase der Vorrichtung 1.

### Bezugszeichenliste

- (1): Vorrichtung
- (2): Wechselstrommotor
- (3): Steuereinheit
- (4): Wicklung
- (5): Wicklung
- (6): Motorkondensator
- (7): Leistungsschalter
- (8): Leistungsschalter
- (9): Widerstand
- (10): Widerstand
- (11): Netzteil
- (12): Kondensator
- (13): Kondensator
- (14): Anschlussmittel
- (15): Parametriergerät
- (16): Anschluss
- (17): Rechnereinheit
- (18): Schaltelement
- (R): Leitung
- (L): Leitung

## Patentansprüche

1. Vorrichtung zum Betrieb eines Stellsystems in zwei Laufrichtungen, mit einem Antrieb zur Betätigung des Stellsystems, mit einer Steuereinheit zur Steuerung des Antriebs und mit Anschlussmitteln zur Einspeisung einer Versorgungsspannung, wobei über die Anschlussmittel (14) ein Steuersignal in die Steuereinheit (3) eingelesen wird, wodurch diese in einen Parametriermodus versetzt wird, und wobei im Parametriermodus Parametrierbefehle über die Anschlussmittel (14) in die Steuereinheit (3) eingelesen werden, da durch **gekennzeichnet**, dass zur Parametrierung der Vorrichtung ein Parametriergerät (15) an die Anschlussmittel (14) angeschlossen wird, dass die Anschlussmittel (14) Anschlüsse für zwei Leitungen (R, L) aufweisen, wobei zur Vorgabe der Laufrichtung des Stellsystems selektiv die Versorgungsspannung auf eine der beiden Leitungen (R, L) gelegt wird, dass der Antrieb von einem Wechselstrommotor (2) gebildet ist, welcher eine erste und zweite Wicklung (4, 5) aufweist, an welche über jeweils eine der Leitungen (R, L) zur Vorgabe der Laufrichtung die Versorgungsspannung angelegt wird, dass der Antrieb mittels wenigstens eines Leistungsschalters (7, 8) ein- und ausgeschaltet wird, und dass zur Generierung eines Antwortcodes der oder ein Leistungsschalter (7, 8) durch die Steuereinheit (3) angesteuert wird.

2. Vorrichtung nach Anspruch 1, **dadurch gekennzeichnet, dass** die Versorgungsspannung von einer Wechselspannung mit einer vorgegebenen Grundfrequenz gebildet ist, und dass das Steuersignal als von der Versorgungsspannung abgeleitetes Trägersignal ausgebildet ist, dessen Frequenz sich von der Grundfrequenz unterscheidet.

3. Vorrichtung nach Anspruch 2, die Frequenz des Trägersignals dem doppelten Wert der Grundfrequenz der Versorgungsspannung entspricht.

4. Vorrichtung nach Anspruch 3, **dadurch gekennzeichnet, dass** in dem Parametriergerät (15) ein Schaltelement (18) integriert ist, mittels dessen aus der Versorgungsspannung das Trägersignal generiert wird.

5. Vorrichtung nach einem der Ansprüche 2 - 4, **dadurch gekennzeichnet, dass** das Trägersignal auf eine der beiden Leitungen (R, L) zur Vorgabe der Laufrichtung des Stellsystems eingespeist wird.

6. Vorrichtung nach Anspruch 5, **dadurch gekennzeichnet, dass** das Trägersignal während der gesamten Zeitdauer, innerhalb derer sich die Steuereinheit (3) im Parametriermodus befindet, auf der Leitung (R) anliegt.

7. Vorrichtung nach einem der Ansprüche 5 oder 6, **dadurch gekennzeichnet, dass** innerhalb des Parametriermodus über die zweite Leitung (L) zur Vorgabe der Laufrichtung des Stellsystems die Parametrierbefehle in die Steuereinheit (3) eingelesen werden.

8. Vorrichtung nach Anspruch 7, **dadurch gekennzeichnet, dass** die Parameterbefehle in Form von Abfragecodes in die Steuereinheit (3) eingelesen und dort decodiert werden, worauf die Steuereinheit (3) einen Antwortcode an das Parametriergerät (15) sendet.

9. Vorrichtung nach Anspruch 8, **dadurch gekennzeichnet, dass** zwischen der Steuereinheit (3) und dem Parametriergerät (15) eine bidirektionale Datenübertragung erfolgt.

10. Vorrichtung nach Anspruch 9, **dadurch gekennzeichnet, dass** der Antwortcode eine Quittierung für den jeweiligen Abfragecode bildet.

11. Vorrichtung nach einem der Ansprüche 8-10, **dadurch gekennzeichnet, dass** die Abfragecodes und Antwortcodes jeweils als Folgen von Spannungspulsen ausgebildet sind.

12. Vorrichtung nach Anspruch 11, **dadurch gekennzeichnet, dass** der Takt der Spannungspulse der Frequenz des Trägersignals entspricht.

13. Vorrichtung nach einem der Ansprüche 8 - 12, **dadurch gekennzeichnet, dass** die Abfragecodes und die Antwortcodes jeweils aus einem Befehlsteil und einem Datenteil bestehen.

14. Vorrichtung nach einem der Ansprüche 1 - 13, **dadurch gekennzeichnet, dass** die Steuereinheit (3) von einem Mikrocontroller gebildet ist.

15. Vorrichtung nach einem der Ansprüche 1 - 14, **dadurch gekennzeichnet, dass** der oder jeder Leistungsschalter (7, 8) von einem Triac gebildet ist.

16. Vorrichtung nach einem der Ansprüche 1 - 15, **dadurch gekennzeichnet, dass** das Stellsystem von einem Rollladen, einer Jalousie, einer Markise oder einem Tor gebildet ist.

17. Vorrichtung nach einem der Ansprüche 1 - 16, **dadurch gekennzeichnet, dass** der Antrieb als Schubspindelantrieb, insbesondere zur Betätigung von Beschattungsanlagen, ausgebildet ist.

## Claims

1. Device for operating a setting system in two directions of running, comprising a drive for actuating the setting system, a control unit for controlling the drive, and connecting means for the feed of a supply voltage, wherein a control signal is read into the control unit (3) by way of the connecting means (14), whereby the control unit is set into a parameterising mode and wherein in the parameterising mode parameter commands are read into the control unit (3) by way of the connecting means (14), **characterised in that** for parameterisation of the device a parameterising apparatus (15) is connected with the connecting means (14), that the connecting means (14) comprises connections for two lines (R, L), wherein for presetting the running direction of the setting system the supply voltage is selectively applied to one of the two lines (R, L), that the drive is formed by an alternating current motor (2) having a first and a second winding (4, 5), to each of which the supply voltage is applied by way of a respective one of the lines (R, L) for presetting the running direction, that the drive is switched on and off by means of at least one circuitbreaker (7, 8) and that for generating a response code the or one circuitbreaker (7, 8) is triggered by the control unit (3).

2. Device according to claim 1, **characterised in that** the supply voltage is formed by an alternating voltage with a predetermined basic frequency and that the control signal is formed as a carrier signal, which is derived from the supply voltage and the frequency of which differs from the basic frequency.

3. Device according to claim 2, **characterised in that** the frequency of the carrier signal corresponds with twice the value of the basic frequency of the supply voltage.

4. Device according to claim 3, **characterised in that** a switching element (18) by means of which the carrier signal is generated from the supply voltage is integrated in the parameterising apparatus (15).

5. Device according to any one of claims 2 to 4, **characterised in that** the carrier signal is fed in on one of the two lines (R, L) for presetting the running direction of the setting system.

6. Device according to claim 5, **characterised in that** the carrier signal is applied to the line (R) during the whole time period within which the control unit (3) is disposed in the parameterising mode.

7. Device according to one of claims 5 and 6, **characterised in that** within the parameterising mode the parameterising commands are read into the control unit (3) by way of the second line (L) for presetting the running direction of the setting system.

8. Device according to claim 7, **characterised in that** the parameterising commands are read into the control unit (3) in the form of interrogation codes and are decoded there, whereupon the control unit (3) transmits a response code to the parameterising apparatus (15).

9. Device according to claim 8, **characterised in that** a bidirectional data transmission takes place between the control unit (3) and the parameterising apparatus (15).

10. Device according to claim 9, **characterised in that** the response code forms an acknowledgement for the respective interrogation code.

11. Device according to any one of claims 8 to 10, **characterised in that** the interrogation codes and answer codes are respectively formed as trains of voltage pulses.

12. Device according to claim 11, **characterised in that** the timing of the voltage pulse corresponds with the frequency of the carrier signal.

13. Device according to any one of claims 8 to 12, **characterised in that** the interrogation codes and the response codes each consist of a command part and a data part.

14. Device according to any one of claims 1 to 13, **characterised in that** the control unit (3) is formed by a microcontroller.

15. Device according to any one of claims 1 to 14, **characterised in that** the or each circuitbreaker (7, 8) is formed by a triac.

16. Device according to any one of claims 1 to 15, **characterised in that** the setting system is formed by a roller blind, a venetian blind, an awning or a door.

17. Device according to any one of claims 1 to 16, **characterised in that** the drive is constructed as a thrust spindle drive, particularly for the actuation of shading installations.

## Revendications

1. Dispositif pour faire fonctionner un système de positionnement dans deux sens de déplacement, avec un entraînement pour actionner le système de positionnement, avec une unité de commande pour commander l'entraînement et avec des moyens de connexion pour injecter une tension d'alimentation, un signal de commande étant entré dans l'unité de commande (3) via les moyens de connexion (14), par lequel celle-ci est mise dans un mode de paramétrage, et des instructions de paramétrage étant entrées dans l'unité de commande (3) via les moyens de connexion (14) dans ce mode de paramétrage, **caractérisé en ce que** pour paramétrer le dispositif, un appareil de paramétrage (15) est connecté aux moyens de connexion (14), que les moyens de connexion (14) présentent des connexions pour deux lignes (R, L), la tension d'alimentation étant appliquée sélectivement sur l'une des deux lignes (R, L) pour prescrire le sens de déplacement du système de positionnement, que l'entraînement est formé par un moteur à courant alternatif (2), lequel présente un premier et un deuxième enroulements (4, 5) auxquels la tension d'alimentation est appliquée via respectivement une des lignes (R, L) pour prescrire le sens de déplacement, que l'entraînement est mis en marche et arrêté au moyen d'au moins un commutateur de puissance (7, 8), et que le ou un commutateur de puissance (7, 8) est commandé par l'unité de commande (3) pour générer un code de réponse.

2. Dispositif selon la revendication 1, **caractérisé en ce que** la tension d'alimentation est formée par une tension alternative d'une fréquence fondamentale prédéfinie, et que le signal de commande se présente sous la forme d'un signal porteur dérivé de la tension d'alimentation, dont la fréquence est différente de la fréquence fondamentale.

3. Dispositif selon la revendication 2, **caractérisé en ce que** la fréquence du signal porteur correspond au double de la fréquence fondamentale de la tension d'alimentation.

4. Dispositif selon la revendication 3, **caractérisé en ce qu'**un élément de commutation (18), au moyen duquel le signal porteur est généré à partir de la tension d'alimentation, est intégré dans l'appareil de paramétrage (15).

5. Dispositif selon une des revendications 2 à 4, **caractérisé en ce que** le signal porteur est injecté sur une des deux lignes (R, L) pour prescrire le sens de déplacement du système de positionnement.

6. Dispositif selon la revendication 5, **caractérisé en ce que** le signal porteur est présent sur la ligne (R) pendant toute la durée durant laquelle l'unité de commande (3) se trouve dans le mode de paramétrage.

7. Dispositif selon une des revendications 5 ou 6, **caractérisé en ce que** dans le mode de paramétrage, les instructions de paramétrage sont entrées dans l'unité de commande (3) via la deuxième ligne (L) pour prescrire le sens de déplacement du système de positionnement.

8. Dispositif selon la revendication 7, **caractérisé en ce que** les instructions de paramétrage sont entrées dans l'unité de commande (3) sous la forme de codes d'interrogation et décodées dans celle-ci, à la suite de quoi l'unité de commande (3) envoie un code de réponse à l'appareil de paramétrage (15).

9. Dispositif selon la revendication 8, **caractérisé en ce qu'**une transmission de données bidirectionnelle a lieu entre l'unité de commande (3) et l'appareil de paramétrage (15).

10. Dispositif selon la revendication 9, **caractérisé en ce que** le code de réponse constitue un accusé de réception pour le code d'interrogation respectif.

11. Dispositif selon une des revendications 8 à 10, **caractérisé en ce que** les codes d'interrogation et les codes de réponse sont formés dans chaque cas de suites d'impulsions de tension.

12. Dispositif selon la revendication 11, **caractérisé en ce que** la cadence des impulsions de tension correspond à la fréquence du signal porteur.

13. Dispositif selon une des revendications 8 à 12, **caractérisé en ce que** les codes d'interrogation et les codes de réponse sont composés dans chaque cas d'une partie instruction et d'une partie données.

14. Dispositif selon une des revendications 1 à 13, **caractérisé en ce que** l'unité de commande (3) est formée par un microcontrôleur.

15. Dispositif selon une des revendications 1 à 14, **caractérisé en ce que** le ou tous les commutateur(s) de puissance (7, 8) est/sont réalisé(s) sous la forme de triac(s).

16. Dispositif selon une des revendications 1 à 15, **caractérisé en ce que** le système de positionnement est formé par un volet roulant, un store, une marquise ou un portail.

17. Dispositif selon une des revendications 1 à 16, **caractérisé en ce que** l'entraînement est réalisé sous la forme d'un entraînement à broche de poussée, en particulier destiné à actionner des systèmes d'ombrage.
